# DEMANDE DE BREVET EUROPEEN

(11) **EP 2 311 782 A1**
(43) Date de publication de la demande: **20.04.2011**
(21) Numéro de dépôt: 10187266.1
(22) Date de dépôt: 12.10.2010
(51) Int. Cl.: C04B 26/14, C04B 26/16

(54) **Procédé de fabrication d'un élément de construction compose d'un granulat agglomère avec une résine époxy ou une résine polyuréthane**

(30) Priorité: 13.10.2009 FR 0904896
(71) Demandeur: Sublet, Alain, 38690 Biol (FR)
(72) Inventeur: Sublet, Alain, 38690 Biol (FR)
(74) Mandataire: Sarlin, Laure V.

(57) **Abrégé**

La présente invention concerne un procédé de fabrication d'un granulat aggloméré avec une résine époxy ou une résine polyuréthane, comprenant les étapes suivantes:
a) le mélange d'un granulat destiné à être aggloméré pour former l'élément de construction, avec une résine époxy ou une résine phénolique et un agent durcisseur de la résine sélectionnée,
b) le durcissement de la résine, pour obtenir l'élément de construction souhaité.

## Description

La présente invention concerne le domaine technique des matériaux de construction.

Habituellement, les matériaux ou éléments de construction utilisés dans des travaux de gros oeuvre sont fabriqués à partir de ciment, de terre cuite, de plâtre, etc... Ils remplissent la plupart des critères de satisfaction du client final, mais aucun ne les couvre tous. Par exemple, dans le cas des carreaux ou plaques de cloisonnement, le carreau de plâtre a un aspect de surface lisse qui intéresse l'utilisateur, mais son poids de 70 kg/M², et le fait qu'il ne résiste pas à l'eau et au feu, sont un frein à son utilisation. La plaque de plâtre, quant à elle, a un rendement économique et un aspect de surface très satisfaisant, mais elle présente différents inconvénients : elle doit s'appuyer sur une structure métallique qui est un mauvais isolant acoustique ; sa grande dimension ne permet pas son utilisation sur certains chantiers de rénovation ; il n'est pas possible d'y fixer des charges lourdes. Si l'on considère le carreau de brique : celui-ci est rapide à monter, ce qui rend son prix fourni posé intéressant, mais il reste lourd (55 kg/M²) et son aspect de surface entraîne un surcoût en termes d'enduisage et les fixations ne sont pas simples à poser. Le carreau de ciment est, certes, le plus économique en termes de fourniture, mais il ne remplit pas les critères de poids, d'aspect de surface et de résistance au feu, notamment. Enfin, le carreau de béton cellulaire est très intéressant en termes de prix de fourniture, de résistance à l'eau, de résistance au feu, de poids (33 kg/M²) et de résistance thermique, mais, compte tenu de sa faible résistance phonique et de son aspect de surface irrégulier, il ne correspond pas aux attentes du client.

Il existe donc un besoin pour de nouveaux éléments de construction dont les propriétés en termes de caractère hydrofuge, résistance au feu, aspect de surface, densité, résistance thermique, résistance phonique, tenue des fixations, découpe aisée, souplesse mécanique limitant la fissuration, pose aisée, puissent être contrôlées, à façon, en fonction de leur destination et des attentes des clients.

Les documents GB 952,186, US 6,110,996 et US 2007/0004824 notamment décrivent des matériaux de construction à base de résine.

De tels matériaux et éléments de construction se doivent également de pouvoir être produits à un prix de revient faible.

Dans ce contexte, la présente invention concerne un procédé de fabrication d'un élément de construction composé, au moins pour partie, d'un granulat aggloméré avec une résine époxy ou une résine polyuréthane, comprenant les étapes suivantes :
a) le mélange d'un granulat destiné à être aggloméré pour former l'élément de construction, avec une résine époxy ou une résine phénolique et un agent durcisseur de la résine sélectionnée,
b) le durcissement de la résine, pour obtenir l'élément de construction souhaité,
caractérisé en ce que le durcissement de la résine est réalisé sous l'action d'un gaz catalyseur qui est diffusé au sein du mélange.

Le procédé selon l'invention permet d'associer les caractéristiques thermiques, phoniques, hydrofuges, et/ou densimétriques du granulat utilisé avec les caractéristiques hydrofuges, mécaniques, liées à la productivité et/ou l'aspect de surface dû au procédé de mise en oeuvre, afin d'obtenir des matériaux de construction dont les caractéristiques couvrent une plus large gamme de caractéristiques que celle que pouvait proposer l'art antérieur.

L'élément de construction obtenu dans le cadre de l'invention peut, notamment, se présenter sous la forme d'un bloc de structure porteur ou non porteur, d'un carreau ou d'une plaque de cloisonnement, d'un bloc ou d'une dalle de toiture ou de plancher, d'un appui de fenêtre, d'un linteau droit ou cintré, d'une pièce architectonique préfabriquée, notamment du type oeil de boeuf ou truaut, d'un voutain, d'un isolant thermique intérieur ou extérieur, d'un U coquille (linteau à couler sur un chantier), d'un pré-linteau de coffrage, d'un bloc de chainage horizontal ou vertical, d'un coffre de volet roulant ou d'un plan de travail notamment de cuisine ou de bricolage.

Le granulat utilisé dans le cadre de l'invention est composé de sable à dominante siliceuse, de quartz, de sable de chromite, de sable de type olivine, de magnésie, de carbonate de calcium, de sable de zircon, d'alumine, d'oxyde de zirconium, d'oxyde de titane, de carbure de silicium, de nitrure de silicium, de nitrure de bore, de bauxite, de corindon, de cristobalite, de tobermorite naturelle ou industrielle (également nommée béton cellulaire), de pierre ponce naturelle ou industrielle, de pierre de lave, de bois, de laine organique ou minérale, de plumes, de végétaux broyés ou coupés, de polystyrène expansé (PSE), éventuellement en mélange.

Le pourcentage de chacun des matériaux ci-dessus mentionnés, au sein du granulat, sera fonction des propriétés souhaitées pour l'élément de construction sélectionné, notamment en termes de résistance mécanique à la compression et au cisaillement, de résistance thermique, de résistance phonique, de résistance au feu, de résistance à l'eau et d'aspect de surface.

De préférence, l'élément de construction conforme à l'invention sera constitué, en partie, d'un matériau de faible densité. Ce matériau de faible densité pourra se trouver soit, au sein du granulat, soit sous la forme d'au moins une plaque ou bloc additionnel présent dans l'élément de construction.

Il est également possible d'utiliser en combinaison un granulat composé pour partie d'un matériau de faible densité et une ou plusieurs plaques ou blocs additionnels en un matériau de faible densité, de même nature ou de nature différente de celui présent dans le granulat. En particulier, l'élément de construction comprendra de 29 à 98%, de préférence de 38 à 96 % en volume (par rapport au volume total de l'élément de construction) d'un matériau présentant une densité inférieure au sable, et notamment inférieure à 600 kg/M³, par exemple choisi parmi : la tobermorite industrielle ou naturelle, la pierre ponce industrielle ou naturelle, la pierre de lave, le bois, les plumes, la laine organique ou minérale, les végétaux broyés ou coupés, le PSE. Selon un mode de réalisation particulier de l'invention, l'élément de construction comprend une plaque ou bloc constitué exclusivement de tobermorite industrielle ou naturelle.

Selon un mode de réalisation particulier de l'invention, l'élément de construction est constitué exclusivement d'un granulat tel que précédemment décrit aggloméré avec une résine époxy ou polyuréthane. Selon un autre mode de réalisation particulier de l'invention, l'élément de construction est constitué exclusivement d'un granulat tel que précédemment décrit aggloméré avec une résine époxy ou polyuréthane et d'une ou plusieurs plaque(s) ou bloc(s) en un matériau présentant une densité inférieure au sable, et notamment inférieure à 600 kg/M³, solidarisé(s) au granulat aggloméré avec la résine époxy ou polyuréthane, de manière à être positionné(s) en surface de l'élément de construction, ou partiellement ou totalement emprisonné(s) dans le granulat aggloméré avec la résine époxy ou polyuréthane.

Le granulat est composé d'un ensemble de particules, copeaux, grains, etc... se présentant sous une forme individualisée, avant d'être agglomérés. Leur taille a une influence sur la densité de l'élément de construction obtenu. Par exemple, les agrégats présenteront une taille maximale appartenant à la gamme 200 µ à 5 mm, de préférence à la gamme 400 µ à 2 mm. Selon un mode de réalisation particulier de l'invention, au moins une partie du granulat pourra être constitué d'un matériau de forte densité choisi, par exemple, parmi le sable à dominante siliceuse, le quartz, le sable de chromite, le sable de type olivine, la magnésie, le carbonate de calcium, le sable de zircon, d'alumine, d'oxyde de zirconium, d'oxyde de titane, de carbure de silicium, de nitrure de silicium, de nitrure de bore, de bauxite, de corindon ou de cristobalite. Selon un mode de réalisation particulier de l'invention, de 5,5 à 70,5 %, et préférentiellement de 8 à 60% en volume de l'élément de construction sera constitué d'un matériau de forte densité, notamment supérieure à 800 kg/M³.

Dans l'élément de construction obtenu, la résine joue le rôle de liant et assure la cohésion de l'élément. Les résines de type époxy ou polyuréthane sélectionnées donnent à l'élément fabriqué sa résistance mécanique, tant en compression qu'en cisaillement. De préférence, le volume de résine époxy ou polyuréthane représente de 0,5 à 6%, et préférentiellement de 1 à 4% du volume total de l'élément de construction. En fait, par exemple, lorsque le taux de matériau léger est hors de la gamme 94-96% ou le taux de résine hors de la gamme 2-6%, des granulats lourds seront utilisés. En particulier, pour des taux en volume de 5,5 à 70,5 %, de préférence de 8 à 60% de granulats lourds, on pourra utiliser de 0,5 à 6%, et de préférence 1 à 4 % de résine et de 29 % à 94 %, et de préférence 39% à 88 % de matériau léger (sous la forme de granulats et/ou plaque ou bloc).

Préalablement au durcissement, une résine époxy ou une résine phénolique (précurseur de la résine polyuréthane) et un agent durcisseur de la résine sélectionnée sont mélangées avec le granulat sélectionné. A titre d'exemples de résines phénoliques, on peut citer les résines du type formophénol, résol ou au stade A, ou des résines novolaques et également des résines du type résitol ou au stade B. Les résines formophénoliques, et notamment du type urée/formol, mélamine/formol ou résorcine/formol, sont néanmoins préférées. Pour plus de détails, on pourra se référer à la demande de brevet FR 2 420 549, pages 1 et page 2, qui décrit, également, des résines d'éthers benzyliques. Ces résines phénoliques peuvent être en solution dans un solvant organique, notamment aliphatique (originaire de l'agrochimie), aromatique (originaire de la pétrochimie) ou du type silicate d'éthyle (origine minérale). Les résines phénoliques peuvent également se présenter sous la forme d'une émulsion aqueuse contenant peu ou pas de solvant organique, comme décrit dans la demande de brevet FR 2 420 549.

Un agent durcisseur est également présent dans le mélange pour permettre la polymérisation et le durcissement de la résine époxy ou polyuréthane. L'agent durcisseur est fonction de la résine sélectionnée : dans le cas d'une résine époxy, un agent durcisseur du type peroxyde organique sera utilisé, alors qu'un agent durcisseur du type isocyanate sera utilisé dans le cas d'une résine phénolique, afin d'obtenir un polyuréthane. Dans ce cas, l'agent durcisseur pourra être du type polyisocyanate aliphatique, cycloaliphatique ou aromatique, ayant de préférence de 2 à 5 groupes isocyanates, tels que par exemple décrits dans les documents US 3 409 579 et US 3 676 392. Il est également possible d'utiliser des prépolymères d'isocyanates formés par réaction d'un excès de polyisocyanate avec un polyalcool, par exemple un prépolymère de toluènediisocyanate et d'éthylèneglycol. Des polyisocyanates appropriés comprennent les polyisocyanates aliphatiques tels qu'hexaméthylènediisocyanate, les polyisocyanates alicycliques tels que 4,4'-dicyclohexylméthanediisocyanate et les polyisocyanates aromatiques tels que 2,4- et 2,6-toluènediisocyanates, diphénylméthanediisocyanate et leurs dérivés diméthylés. D'autres exemples de polyisocyanates appropriés sont le 1,5-naphtalènediisocyanate, le triphénylméthanetriisocyanate, le xylylènediisocyanate et leurs dérivés méthylés, les polyméthylènepolyphénylpolyisocyanates, les chlorophénylène-2, 4-diisocyanates, etc. Bien que tous les polyisocyanates réagissent avec la résine phénolique pour former une structure de polymère réticulé, les polyisocyanates préférés sont des polyisocyanates aromatiques et en particulier les diphénylméthanediisocyanates, les triméthylènetriphényltriisocyanates et leurs mélanges. Différentes résines et agents durcisseurs sont disponibles commercialement. A titre d'exemple, on peut citer la résine acrylique modifiée époxy, en solution dans un mélange acrylate commercialisée sous la Référence Avepox 2030 par la société Ashland Avébène, la résine acrylique modifiée époxy (Avepox 6005S) vendue sous la forme d'un mélange liquide avec une résine jouant le rôle d'agent durcisseur contenant un hydroperoxyde (Avepox 6004S), le peroxyde organique commercialisé sous la Référence Avepox P2 (ou PII) par la société Ashland Avébène, la résine formophénolique vendue sous la référence gasharz 31E45 par la société Huttenes-albertus et le durcisseur à base d'isocyanate vendu sous la référence cb aktivator 32A52 par la société Huttenes-albertus. On peut, notamment, utiliser de 5 à 70litres de résine acrylique modifiée époxy ou formophénolique par M³ de granulat. L'agent durcisseur pourra être introduit, en même temps que le granulat et la résine époxy ou phénolique. Mais, de préférence, l'agent durcisseur sera introduit après mélange préalable du granulat et de la résine époxy ou phénolique. Le mélange granulat/résine époxy ou phénolique/agent durcisseur est ensuite malaxé, jusqu'à obtention d'un mélange homogène. Le plus souvent, le mélange est, ensuite, introduit dans un moule de la forme de l'élément de construction, soit manuellement, soit à l'aide d'une décharge d'air comprimé, par exemple sous une pression de 0,5 à 10bars. Le durcissement de la résine est ensuite réalisé sous l'action d'un gaz catalyseur qui est dissipé au sein du mélange. Le durcissement sous l'action d'un tel gaz catalyseur permet notamment d'accélérer le durcissement de la résine. Par ailleurs, le durcissement est réalisé à froid, notamment à une température appartenant à la gamme 10 à 40 °C, de préférence à la gamme 20 à 30 °C, et notamment de l'ordre de 25 °C correspondant à la température ambiante.

Là encore, le gaz catalyseur est fonction de la résine sélectionnée. Dans le cas d'une résine époxy, et notamment acrylique modifiée époxy, un gaz catalyseur contenant du SO₂ sera utilisé. Le SO₂ est, par exemple, mélangé à un gaz vecteur de type argon, air ou azote. Dans le cas d'une résine phénolique, et notamment formophénol, le gaz catalyseur contiendra du CO₂ ou une amine, en particulier une amine tertiaire, par exemple seule sous une forme vaporisée ou en mélange avec du CO₂. Le catalyseur de durcissement d'une résine phénolique, et notamment formophénol, peut, notamment, se présenter sous la forme d'une amine tertiaire sous forme vapeur, telle que la triéthylamine, la diméthyléthylamine, la diméthyléthanolamine, la pyridine, la 4-phénylpropylpyridine, la 2,5-lutidine, la 3,5-lutidine, la 4-éthylpyridine, la 4-t-butylpyridine, la 4-benzylpyridine, l'acridine, la 2-méthoxypyridine, la 3-chloropyridine, la quinoléine, la N-méthylimidazole, la 1,4-thiazine, la morpholine et la N-méthylmorpholine.

Le gaz catalyseur est envoyé sous pression, notamment sous une pression appartenant à la gamme allant de 0,5 à 4 bars. Le temps de traitement dure le plus souvent de quelques secondes à quelques minutes.

Dans le cadre de l'lnvention, le procédé dit « de la boite froide », utilisé jusqu'à ce jour exclusivement pour la réalisation de noyaux de fonderie ou de moules, est mis en oeuvre pour la réalisation de matériaux ou éléments de construction.

Le procédé selon l'invention est facile à mettre en oeuvre et permet d'obtenir des matériaux aux propriétés homogènes et contrôlées en fonction des composants choisis.

En fonction des résultats attendus, une plaque ou bloc additionnel en un matériau de faible densité peut également être introduit, avant ou après le mélange résine/granulat mais en amont du durcissement, de manière à réduire la masse volumique du produit final et/ou apporter un complément d'isolation thermique ou phonique à l'élément de construction.

Cette plaque ou bloc, présentera une structure cohérente propre, avant d'être intégré dans l'élément de construction conforme à l'invention. Cette plaque ou bloc pourra être composé exclusivement d'un matériau de faible densité, en particulier dans le cas d'une plaque ou d'un bloc de tobermorite naturelle ou industrielle, de pierre ponce naturelle ou industrielle, de pierre de lave ou de polystyrène expansé. Dans ce cas, au sein de l'élément de construction, la partie correspondant à cette plaque ou bloc sera donc exempte de résine.

Dans le cas où la plaque ou le bloc est composé de copeaux de bois, de laine organique ou minérale, de plumes, de végétaux broyés ou coupés, ces derniers auront dus être préalablement agglomérés, avec une résine de même nature ou de nature différente de celle servant à lier le reste du granulat. N'importe quel type de résine pourra être utilisé, sous réserve qu'elle conduise à une plaque ou bloc présentant la densité souhaitée, à savoir inférieure à 600 kg/M³.

Cette plaque ou bloc pourra être positionné, de manière à se trouver en surface de l'élément de construction réalisé ou bien de manière à être emprisonnée dans le mélange résine/granulat. Selon un mode de réalisation, la plaque ou bloc peut être positionné comme une âme prise en sandwich entre deux couches de mélange granulat / résine époxy ou phénolique / agent durcisseur ou encore être totalement emprisonné au sein du mélange granulat / résine époxy ou phénolique / agent durcisseur. Cette plaque ou bloc présentera, avant son introduction dans le procédé de l'invention, un caractère cohérent et aura notamment une épaisseur appartenant à la gamme allant de 5 mm à 40 cm, en fonction de l'élément de construction réalisé.

Une fois le durcissement achevé, l'élément de construction pourra être lavé avec de l'air sec sous pression, afin d'éliminer les surplus de gaz catalyseur.

Ensuite, l'élément de construction est obtenu après démoulage. Si le durcissement n'est pas réalisé dans un moule dont la forme correspond à l'élément de construction, un découpage complémentaire pourra être effectué. C'est le cas, notamment, d'éléments de construction du type carreaux ou plaques de cloisonnement, blocs ou dalles de toiture ou de plancher, plans de travail.

Les exemples ci-dessous permettent d'illustrer l'invention, mais n'ont aucun caractère limitatif.

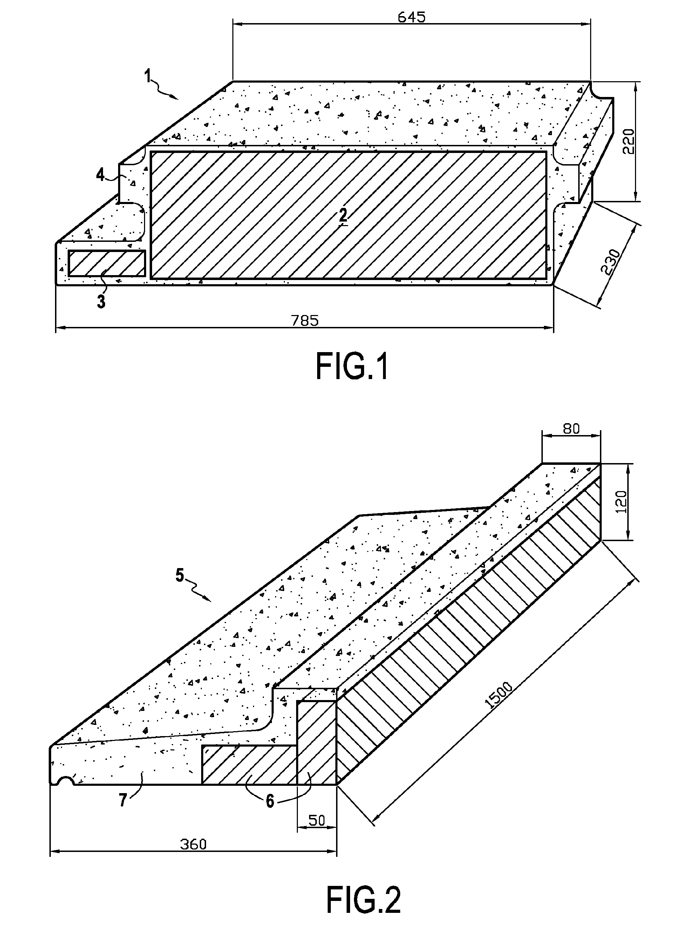

Les **Figures 1** à **3** sont des vues en perspective de l'intérieur des moules remplis avec les matériaux nécessaires à la réalisation des éléments de construction des exemples 3 à 5 respectivement, les côtes des parois internes de chaque moule (non représenté dans son ensemble) étant mentionnées en mm.

### EXEMPLE 1 : CARREAU DE CLOISONNEMENT PLEIN

De la tobermorite (déchets de production de béton cellulaire d'une usine du groupe Xella Thermopierre) est réduite en granulats de moins de 400 µm.

Un volume égal de sable siliceux est ajouté à l'agrégat de tobermorite.

Une résine formophénolique vendue sous la référence gasharz 31E45 par la société Huttenes-albertus, puis un durcisseur à base d'isocyanate vendu sous la référence cb aktivator 32A52 par la société Huttenes-albertus sont ajoutés au mélange à hauteur de 50 litres / M³ chacun.

Le mélange est introduit dans le moule correspondant à l'aide d'une décharge d'air comprimé. Le mélange est durci à l'aide d'un gaz, à base d'amines et de CO₂ envoyé sous pression de 3,5 bars, pendant 4s.

Le produit obtenu est lavé avec de l'air sec sous pression, afin d'éliminer les surplus de gaz catalyseur. Il est ensuite démoulé. Le carreau de cloisonnement contient en volume : 48 % de granulats de faible densité (tobermorite), 48 % de granulats de forte densité (sable siliceux) et 4% de résine polyuréthane.

La densité obtenue pour le carreau de cloisonnement est de 1200 kg/M³. Elle monte à 1600 kg/M³ si les granulats ont une taille comprise entre 600 et 800 µm et peut atteindre 1780 kg/M³ si les granulats ont une taille de 1 à 2 mm.

### EXEMPLE 2 : CARREAU ENCAPSULE

Du sable siliceux (55 ASA de la Société Fulchiron) est mélangé avec de la résine formophénolique vendue sous la référence gasharz 31E45 par la société Huttenes-albertus et un durcisseur à base d'isocyanate vendu sous la référence cb aktivator 32A52 par la société Huttenes-albertus à hauteur de 25 litres / M³ chacun.

Dans un moule de 635mm * 510mm * 70mm, une âme de tobermorite industrielle de 625mm * 500mm * 50mm (caropro de 5 de société Xella Thermopierre) est positionnée. Le mélange à base de sable siliceux est introduit, dans le moule, de part et d'autre de l'âme, à l'aide d'une décharge d'air comprimé.

Le mélange est durci à l'aide d'un gaz, à base d'amines et de CO₂ envoyé sous pression de 3,5 bars, pendant 4s. Le produit obtenu est lavé avec de l'air sec sous pression, afin d'éliminer les surplus de gaz catalyseur. Il est ensuite démoulé. Le carreau contient en volume : 66 % tobermorite sous la forme d'une plaque, 33 % de granulats de forte densité (sable siliceux) et 1% de résine polyuréthane.

Le carreau obtenu correspond aux attentes des clients sur les onze critères suivants : caractère hydrofuge, résistance au feu, aspect de surface lisse, poids faible, résistance thermique élevée, résistance phonique élevée, bonne tenue des fixations, découpe aisée, souplesse mécanique limitant la fissuration, pose aisée et prix faible.

### EXEMPLE 3 : VOUTAIN

Du sable siliceux (55 ASA de la Société Fulchiron) est mélangé avec de la résine formophénolique vendue sous la référence gasharz 31E45 par la société Huttenes-albertus et un durcisseur à base d'isocyanate vendu sous la référence cb aktivator 32A52 par la société Huttenes-albertus à hauteur de 25 litres / M³ chacun.

Dans un moule **1** conforme à la **Figure 1****,** deux plaques de tobermorite industrielle de 625 mm * 250 mm *200 mm (référence **2,** bloc de 20 lisse de densité 350 kg/M³ de la société Xella Thermopierre) et de 250 mm * 140 mm *50 mm (référence **3,** caropro de 5 de la société Xella Thermopierre) sont positionnés.

Le mélange **4** à base de sable siliceux est introduit, autour des plaques ainsi positionnées, dans le moule à l'aide d'une décharge d'air comprimé. Le mélange est durci à l'aide d'un gaz, à base d'amines et de CO₂ envoyé sous pression de 3,5 bars, pendant 4s. Le produit obtenu est lavé avec de l'air sec sous pression afin d'éliminer les surplus de gaz catalyseur. Il est ensuite démoulé. Le voutain contient en volume : 91 % tobermorite sous la forme de deux plaques, 8 % de granulats de forte densité (sable siliceux) et 1% de résine polyuréthane.

### EXEMPLE 4 : APPUI DE FENETRE

Un volume égal de sable siliceux (55 ASA de la Société Fulchiron) et de tobermorite (déchets de production de béton cellulaire d'une usine du groupe Xella Thermopierre) est mélangé avec de la résine formophénolique vendue sous la référence gasharz 31E45 par la société Huttenes-albertus et un durcisseur à base d'isocyanate vendu sous la référence cb aktivator 32A52 par la société Huttenes-albertus à hauteur de 50 litres/ M³ chacun.

Dans un moule **5** conforme à la **Figure 2****,** deux plaques **6** de tobermorite industrielle de 1500 mm * 80 mm *50 mm (caropro de 5 de la société Xella Thermopierre) sont positionnées comme représenté à la **Figure 2****.**

Le mélange **7** à base de sable siliceux est introduit dans le moule à l'aide d'une décharge d'air comprimé. Le mélange est durci à l'aide d'un gaz, à base d'amines et de CO₂ envoyé sous pression de 3,5 bars, pendant 4s. Le produit obtenu est lavé avec de l'air sec sous pression afin d'éliminer les surplus de gaz catalyseur. Il est ensuite démoulé. L'appui de fenêtre contient en volume : 31 % de tobermorite sous la forme de deux plaques, 33 % de granulats de faible densité (tobermorite) 33 % de granulats de forte densité (sable siliceux) et 3% de résine polyuréthane.

### EXEMPLE 5 : BLOC PORTEUR ISOLANT

Du sable siliceux (55 ASA de la Société Fulchiron) est mélangé avec de la résine formophénolique vendue sous la référence gasharz 31E45 par la société Huttenes-albertus et un durcisseur à base d'isocyanate vendu sous la référence cb aktivator 32A52 par la société Huttenes-albertus à hauteur de 50 litres / M³ chacun.

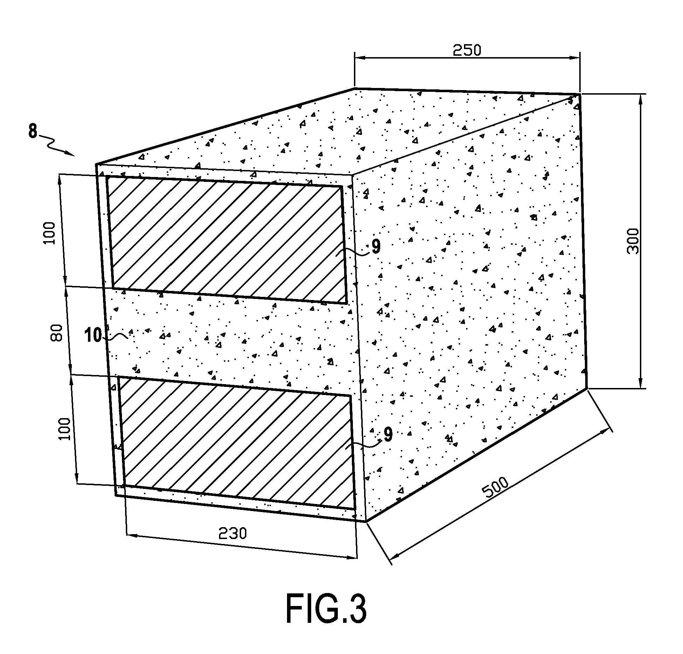

Des plumes sont pulvérisées de résine acrylique, afin d'être agglomérées. Cet agglomérat est découpé en bloc de 480 mm * 230 mm * 100 mm. Dans un moule **8,** les agglomérats **9** de plumes sont positionnés comme représenté à la **Figure 3****.**

Le mélange **10** à base de sable siliceux est introduit dans le moule à l'aide d'une décharge d'air comprimé. Le mélange est durci à l'aide d'un gaz, à base d'amines et de CO₂ envoyé sous pression de 3,5 bars, pendant 4s. Le produit obtenu est lavé avec de l'air sec sous pression afin d'éliminer les surplus de gaz catalyseur. Il est ensuite démoulé. Le bloc porteur isolant contient en volume : 38 % de plumes agglomérées sous la forme de deux plaques, 60 % de granulats de forte densité (sable siliceux) et 2% de résine polyuréthane.

### EXEMPLE 6 : BLOC OEIL DE BOEUF

De la tobermorite (déchets de production de béton cellulaire d'une usine du groupe Xella Thermopierre) est réduite en agrégats grossier de plus de 2 mm.

Une résine formophénolique vendue sous la référence gasharz 31E45 par la société Huttenes-albertus, puis un durcisseur à base d'isocyanate vendu sous la référence cb aktivator 32A52 par la société Huttenes-albertus sont ajoutés au mélange à hauteur de 50 litres / M³ chacun.

Le mélange est introduit manuellement dans un moule de 1000mm * 1000mm *25mm comportant une réservation centrale circulaire de 800mm de diamètre.

Le mélange est durci à l'aide d'un gaz, à base d'amines et de CO₂ envoyé sous pression de 3,5 bars, pendant 4s. Le produit obtenu est lavé avec de l'air sec sous pression afin d'éliminer les surplus de gaz catalyseur, avant d'être démoulé. Le bloc oeil de boeuf contient en volume : 96 % de granulats de faible densité (tobermorite) et 4% de résine polyuréthane.

## Revendications

**1.** Procédé de fabrication d'un élément de construction composé, au moins pour partie, d'un granulat aggloméré avec une résine époxy ou une résine polyuréthane, comprenant les étapes suivantes :
c) le mélange d'un granulat destiné à être aggloméré pour former l'élément de construction, avec une résine époxy ou une résine phénolique et un agent durcisseur de la résine sélectionnée,
d) le durcissement de la résine, pour obtenir l'élément de construction souhaité,
**caractérisé en ce que** le durcissement de la résine est réalisé sous l'action d'un gaz catalyseur qui est diffusé au sein du mélange.

**2.** Procédé selon la revendication 1, **caractérisé en ce que** l'élément de construction se présente sous la forme d'un bloc de structure porteur ou non porteur, d'un carreau ou d'une plaque de cloisonnement, d'un bloc ou d'une dalle de toiture ou de plancher, d'un appui de fenêtre, d'un linteau droit ou cintré, d'une pièce architectonique préfabriquée, notamment du type oeil de boeuf ou truaut, d'un voutain, d'un isolant thermique intérieur ou extérieur, d'un U coquille (linteau à couler sur un chantier), d'un pré-linteau de coffrage, d'un bloc de chainage horizontal ou vertical, d'un coffre de volet roulant ou d'un plan de travail notamment de cuisine ou de bricolage.

**3.** Procédé selon la revendication 1 ou 2, **caractérisé en ce que** le granulat est composé de sable à dominante siliceuse, de quartz, de sable de chromite, de sable de type olivine, de magnésie, de sable de zircon, d'alumine, d'oxyde de zirconium, d'oxyde de titane, de carbure de silicium, de nitrure de silicium, de nitrure de bore, de bauxite, de corindon, de cristobalite, de carbonate de calcium, de tobermorite naturelle ou industrielle, de pierre ponce naturelle ou industrielle, de pierre de lave , de bois, de plumes, de végétaux broyés ou coupés, de laine organique ou minérale, de polystyrène expansé, éventuellement en mélange.

**4.** Procédé selon l'une des revendications précédentes, **caractérisé en ce que** l'on utilise une résine acrylique modifiée époxy et un gaz contenant du SO₂, en tant que catalyseur.

**5.** Procédé selon l'une des revendications précédentes, **caractérisé en ce que** l'on utilise une résine acrylique modifié époxy et un agent durcisseur à base de peroxyde organique.

**6.** Procédé selon l'une des revendications 1 à 3, **caractérisé en ce que** l'on utilise une résine phénolique, de préférence formophénolique, et un gaz contenant une amine ou du CO₂, en tant que catalyseur.

**7.** Procédé selon l'une des revendications 1 à 3 ou 6, **caractérisé en ce que** l'on utilise une résine phénolique, de préférence formophénolique, et un agent durcisseur à base d'isocyanate.

**8.** Procédé selon l'une des revendications précédentes, **caractérisé en ce que** l'on utilise de 5 à 70 litres de résine acrylique modifiée époxy ou formophénolique par M³ de granulat.

**9.** Procédé selon l'une des revendications précédentes, **caractérisé en ce que**, avant durcissement, le mélange obtenu à l'étape a) est disposé dans un moule de la forme de l'élément de construction à fabriquer.

**10.** Procédé selon l'une des revendications précédentes **caractérisé en ce qu'**au moins une plaque ou bloc en un matériau présentant une densité inférieure au sable, et notamment inférieure à 600 kg/m³, par exemple choisi parmi : la tobermorite industrielle ou naturelle, la pierre ponce industrielle ou naturelle, la pierre de lave, le bois, les plumes, les végétaux broyés ou coupés, la laine organique ou minérale, le polystyrène expansé, est également disposé dans le moule.

**11.** Procédé selon l'une des revendications précédentes, **caractérisé en ce que** l'élément de construction comprend de 29 à 98%, de préférence de 38 à 96 % en volume, par rapport au volume total de l'élément de construction, d'un matériau présentant une densité inférieure au sable, et notamment inférieure à 600 kg/M³, par exemple choisi parmi : la tobermorite industrielle ou naturelle, la pierre ponce industrielle ou naturelle, la pierre de lave, le bois, les plumes, la laine organique ou minérale, les végétaux broyés ou coupés, le polystyrène expansé.

**12.** Procédé selon l'une des revendications précédentes **caractérisé en ce que** de 5,5 à 70,5 %, de préférence de 8 à 60% en volume de l'élément de construction est constitué d'un matériau de forte densité, notamment supérieure à 800 kg/m³, par exemple, choisi parmi le sable à dominante siliceuse, le quartz, le sable de chromite, le sable de type olivine, la magnésie, le sable de zircon, d'alumine, d'oxyde de zirconium, d'oxyde de titane, de carbure de silicium, de nitrure de silicium, de carbonate de calcium, de nitrure de bore, de bauxite, de corindon ou de cristobalite.

**13.** Procédé selon l'une des revendications précédentes **caractérisé en ce qu'**il comprend une plaque ou bloc constitué exclusivement de tobermorite industrielle ou naturelle.

**14.** Procédé selon l'une des revendications précédentes **caractérisé en ce que** le volume de résine époxy ou polyuréthane représente de 0,5 à 6%, de préférence de 1 à 4% du volume total de l'élément de construction.
